# FASCICULE DE BREVET EUROPEEN

(11) **EP 3 230 018 B1**
(45) Date de publication et mention de la délivrance du brevet: **19.09.2018**
(21) Numéro de dépôt: 15820563.3
(22) Date de dépôt: 07.12.2015
(51) Int. Cl.: B25J 21/02, G21F 5/12, G21F 7/005, G21F 7/047

(54) **ENSEMBLE DE TRANSFERT**
ÜBERTRAGUNGSANORDNUNG
TRANSFER ASSEMBLY

(30) Priorité: 12.12.2014 FR 1462383
(43) Date de publication de la demande: 18.10.2017
(73) Titulaire: Commissariat à l'Énergie Atomique et aux Énergies Alternatives, 75015 Paris (FR)
(72) Inventeur: GRANET, François, 33700 Merignac (FR); LEURET, Frédéric, 33130 Begles (FR); TISSIER, Iban, 33770 Salles (FR)
(74) Mandataire: Delorme, Nicolas
(86) Numéro de dépôt international: PCT/FR2015/053340
(87) Numéro de publication internationale: WO 2016/092186

(56) Documents cités:
- BE-A- 702 443
- FR-A1- 2 998 328

## Description

La présente invention concerne un ensemble de transfert d'un élément depuis, ou vers, une enceinte contaminée.

Dans les domaines médicaux, chimiques et nucléaires, la manipulation d'éléments contaminants est réalisée dans une enceinte hermétique.

Cette enceinte est alors dite contaminée et doit rester étanche vis-à-vis de l'environnement extérieur.

L'extraction d'un élément situé à l'intérieur de l'enceinte, doit répondre à de strictes normes de sécurité pour protéger l'environnement extérieur et les opérateurs, de toute contamination.

Ainsi, il est nécessaire de garantir l'étanchéité de l'enceinte contaminée avant, pendant et après le transfert.

Pour extraire un élément, d'une enceinte contaminée il est connu d'utiliser des boites de transferts.

Le plus souvent, les boites de transfert sont accostées, de manière étanche, à une ouverture de l'enceinte contaminée.

L'élément à extraire est manipulé depuis l'intérieur de l'enceinte contaminée.

Les boites de transfert connues font uniquement fonction de réceptacle et présentent une porte s'ouvrant vers l'intérieur de l'enceinte contaminée.

Cependant, ces boites de transfert ne permettent pas d'assurer l'étanchéité de l'enceinte contaminée et de la connexion, lorsque l'enceinte contaminée est sous vide (au plus 10⁵ Pascals).

Le mode d'ouverture actuel de la porte de la boite de transfert ne permet pas d'assurer l'étanchéité d'une enceinte contaminée sous vide.

En effet, lorsque l'enceinte contaminée est sous vide, une porte de connexion s'ouvrant vers l'intérieur de l'enceinte contaminée, résiste difficilement à la dépression créée à l'intérieure de l'enceinte contaminée et peut générer un débit de fuite.

En outre, dans le cas, par exemple d'une enceinte contaminée de très grand volume, il peut ne pas être possible de manipuler l'objet contaminé depuis l'intérieur de l'enceinte contaminée.

Une autre solution connue consiste à connecter un sas de manipulation entre l'enceinte contaminée et la boite de transfert.

Cependant, l'ajout d'une vanne à vide entre l'enceinte contaminée et la boite de transfert complexifie le transfert et limite l'accessibilité à l'intérieur de l'enceinte.

Le document BE 702443 A divulgue un ensemble de transfert entre une enceinte contaminée et une boite de transfert, dans lequel la porte de connexion s'ouvre vers l'intérieur de la boite. Pour manoeuvrer cette porte, un levier à main et un verrou de sécurité placés à l'extérieur de la boite doivent être actionnés. L'utilisation de ces éléments qui traversent la paroi de la boite augmente le risque d'un défaut d'étanchéité.

Dans ce contexte technique, un but de la présente invention est de garantir l'étanchéité d'une enceinte contaminée sous vide, et de garantir l'étanchéité lors d'un transfert d'un élément entre l'enceinte contaminée et une boite de transfert.

Il est précisé que dans la présente demande on définit par porte, l'ensemble formé par une ouverture pratiquée dans une surface qui délimite un espace clos et un panneau mobile permettant d'obturer l'ouverture.

Selon une définition générale, l'invention concerne un ensemble de transfert d'un élément depuis ou vers l'intérieur d'une enceinte contaminée close présentant une ouverture. L'ensemble de transfert selon l'invention comprend (i) une première porte obturant de manière sensiblement étanche l'ouverture de l'enceinte contaminée et (ii) une boite de transfert délimitant un espace clos et présentant une ouverture obturée par une deuxième porte configurée pour pivoter vers l'intérieur de la boite de transfert. La première porte et la deuxième porte présentent chacune au moins un organe d'accouplement configuré pour permettre l'accouplement de la première porte et de la deuxième porte et configuré pour permettre à la première porte et à la deuxième porte accouplées l'une à l'autre de pivoter vers l'intérieur de la boite de transfert.

La deuxième porte présente en outre un organe de manoeuvre et un organe de déverrouillage configuré pour permettre le déverrouillage et le verrouillage de la deuxième porte.

Selon l'invention, au moins une poignée pivotante, positionnée à l'interieur de la boite de transfert, comprend l'organe de manoeuvre et l'organe de déverrouillage.

L'utilisation de deux portes distinctes conçues pour être accouplées et pour pivoter vers l'intérieur de la boite de transfert lorsqu'elles sont accouplées, permet à l'ensemble de transfert selon l'invention de garantir l'étanchéité d'une enceinte contaminée sous vide et de garantir l'étanchéité du transfert.

En effet, le mode d'ouverture de la première porte vers l'intérieur de la boite de transfert, et donc vers l'extérieur de l'enceinte contaminée, lui permet de résister à une forte dépression à l'intérieur de l'enceinte sans générer un débit de fuite.

De plus, le mode d'ouverture des portes accouplées permet d'actionner les portes depuis la boite de transfert et de manipuler l'élément, à extraire de l'enceinte contaminée, depuis la boite de transfert.

La première porte peut comprendre un dormant, un ouvrant, des organes de fixation de l'ouvrant sur le dormant et au moins une butée adaptée pour bloquer une translation de l'ouvrant vers l'intérieur de l'enceinte contaminée.

Ainsi, lors d'une dépression à l'intérieur de l'enceinte contaminée, l'ouvrant de la première porte exerce un effort sur la butée et garantit ainsi l'étanchéité de l'enceinte contaminée en empêchant l'échappement d'un débit de fuite.

La boite de transfert peut présenter au moins un orifice configuré pour permettre l'introduction d'une main d'un utilisateur dans la boite de transfert.

L'organe d'accouplement de la première porte peut comprendre au moins une empreinte configurée pour recevoir un macaron de forme correspondante de la deuxième porte.

Au moins un gant peut être assemblé audit au moins un orifice, pour protéger une main d'un utilisateur lors de son introduction dans la boite de transfert.

L'ensemble de transfert peut comprendre au moins un capteur configuré pour détecter l'ouverture et la fermeture de la seconde porte.

De plus, l'ensemble de transfert peut comprendre un dispositif de commande relié audit au moins un capteur.

D'autres caractéristiques et avantages de l'invention se dégageront de la description qui va suivre, en regard des dessins annexés qui représentent une forme de réalisation de l'invention.
- La figure 1 est une vue en perspective de l'ensemble de transfert selon l'invention lorsque la première porte et la deuxième porte ne sont pas accouplées ;
- La figure 2 est une vue en perspective de la première porte fixée à l'enceinte contaminée ;
- La figure 3 est vue en perspective, de derrière, de l'ensemble de transfert lorsque la première porte et la deuxième porte sont accouplées ;
- La figure 4 est une vue en perspective, de face, de la boite de transfert ;
- La figure 5 est une vue en perspective, de derrière, de la boite de transfert ;
- La figure 6 est une vue en perspective, de face, de l'ensemble de transfert lorsque la première porte et la deuxième porte sont accouplées et en position fermée ;

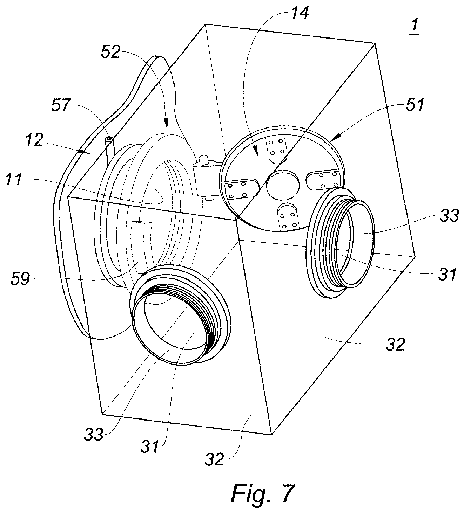

- La figure 7 est une vue en perspective, de face, de l'ensemble de transfert lorsque la première porte et la deuxième porte sont accouplées et en position ouverte ;

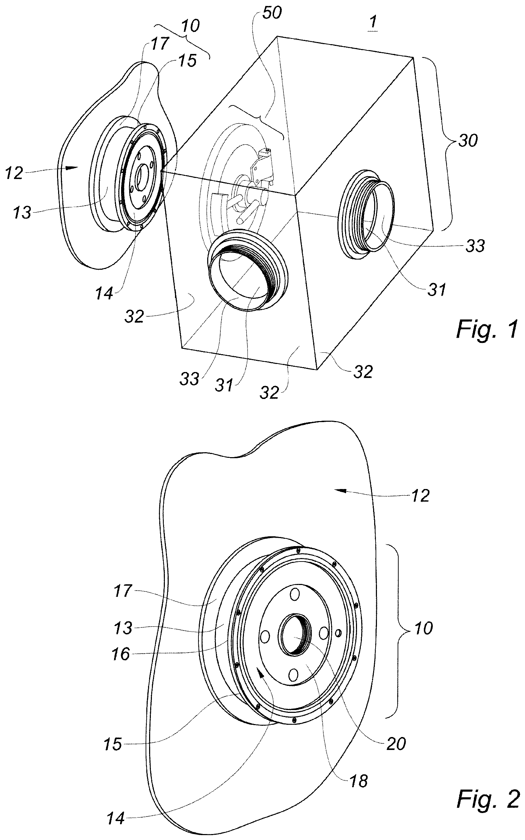

En référence à la figure 1, l'ensemble de transfert 1 comprend essentiellement une première porte 10, une boite de transfert 30 et une deuxième porte 50.

La première porte 10 est représentée sur la figure 2.

La première porte 10 est conçue pour obturer de manière sensiblement étanche une ouverture 11 d'une enceinte contaminée 12.

La première porte 10 comprend un dormant 13 et un ouvrant 14.

Le dormant 13, de la première porte 10, est fixé sur l'enceinte contaminée 12 et délimite l'ouverture 11.

Selon le mode de réalisation ici présenté, le dormant 13 de la première porte 10, présente une forme sensiblement tubulaire présentant deux extrémités.

Une extrémité, dite extrémité intérieure 17, du dormant 13 de la première porte 10 débouche à l'intérieur de l'enceinte contaminée 12.

Une extrémité, dite extrémité extérieure 15, du dormant 13 de la première porte 10 débouche à l'extérieur de l'enceinte contaminée 12.

L'extrémité extérieure 15 présente un retour circulaire 16.

En outre, selon un mode de réalisation, quatre fentes, non représentées, sont ménagées à l'intérieure d'une portion de l'extrémité extérieure 15.

Les quatre fentes sont diamétralement opposées deux à deux.

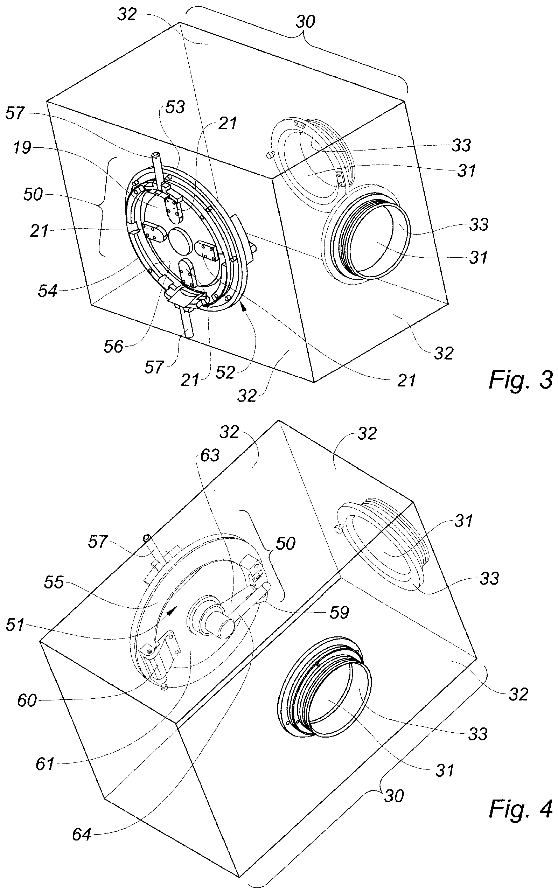

Selon le mode de réalisation ici présenté, l'ouvrant 14 de la première porte 10 présente une forme sensiblement circulaire. L'ouvrant 14 de la première porte 10 présente une face d'accouplement 18 et une face de verrouillage 19 (représentée sur la figure 3).

La face d'accouplement 18 présente une empreinte 20. L'empreinte 20 est positionnée sensiblement au centre de la face d'accouplement 18.

L'empreinte 20 comprend un organe de commande (non représenté) du verrouillage et du déverrouillage de l'ouvrant 14 de la première porte 10.

Comme on peut l'observer sur la figure 3, la face de verrouillage 19 comprend quatre étriers 21. Les quatre étriers 21 sont diamétralement opposés deux à deux et sont positionnés à la périphérie de la face de verrouillage 19. Chaque étrier 21 comprend un pêne (non représenté).

La boite de transfert 30 est représentée sur les figures 1, 3, 4, 5 et 6.

Selon le mode de réalisation ici présenté la boite de transfert 30 présente une géométrie parallélépipédique.

La boite de transfert 30 peut, par exemple, être réalisée en matériau polymère transparent.

La boite de transfert 30 présente deux orifices 31. Les orifices 31 sont dimensionnés pour permettre chacun le passage d'une main et d'un avant-bras d'un utilisateur.

Selon le mode de réalisation ici présenté les orifices 31 sont ménagés chacun dans une paroi 32 de la boite de transfert 30. Les deux parois 32 étant adjacentes.

Cependant, selon un autre mode de réalisation, les deux orifices 31 peuvent être ménagés dans la même paroi 32 de la boite de transfert 30.

Chaque orifice 31 est muni d'un rond de gant 33 permettant la fixation étanche d'un gant.

Une autre paroi 32 de la boite de transfert 30 comprend la deuxième porte 50.

Selon le mode de réalisation ici présenté, la deuxième porte 50 est positionnée en regard d'un orifice 31.

La deuxième porte 50 comprend un ouvrant 51 et un dormant 52.

Le dormant 52 comprend un châssis 53 et un anneau d'accouplement 54.

Selon le mode de réalisation ici présenté, le châssis 53 présente une forme cylindrique.

Une première extrémité du châssis comprend une collerette 55 et une seconde extrémité du châssis est munie de l'anneau d'accouplement 54.

L'anneau d'accouplement 54 est positionné à l'extérieure de la boite de transfert 30.

L'anneau d'accouplement 54 présente une rainure intérieure 56. De plus, l'anneau d'accouplement 54 est monté pivotant dans le châssis 53.

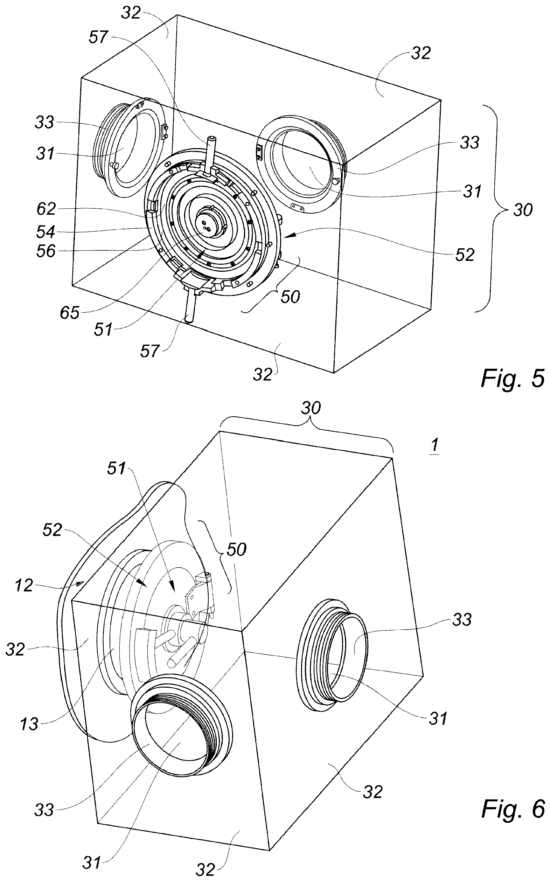

En outre, comme on peut le remarquer sur les figures 3 et 5, l'anneau d'accouplement 54 comprend deux poignées 57, diamétralement opposées.

Comme cela sera développé ultérieurement, l'anneau d'accouplement 54 est conçu pour être accosté sur le retour circulaire 16.

La collerette 55 est positionnée à l'intérieur de la boite de transfert 30.

Il est visible sur la figure 4 que la collerette 55 comprend une gâche 59 et une charnière 60.

La charnière 60 est liée à l'ouvrant 51 de la deuxième porte 50.

L'ouvrant 51 présente une face interne 61 et une face externe 62.

Selon le mode de réalisation ici présenté, l'ouvrant 51 présente la forme d'un disque.

La face interne 61 comprend un pêne rotatif 63 et une poignée pivotante 64 de manoeuvre.

En référence à la figure 5, la face externe 62 présente un macaron 65 positionné sensiblement au centre de la face externe 62 de l'ouvrant 51.

Le macaron 65 comprend plusieurs doigts radiaux extensibles (non représentés).

Les doigts radiaux du macaron 65 sont conçus pour être manoeuvrés entre une position déployée dans laquelle les doigts radiaux émergent du macaron 65 et une position rétractée dans laquelle les doigts radiaux sont positionnés à l'intérieur du macaron 65.

Le fonctionnement de l'ensemble de transfert 1 est le suivant.

Il est précisé que la description qui va suivre part d'une situation dans laquelle, la première porte 10 est en position fermée de manière à obstruer l'ouverture 11 de l'enceinte contaminée 12. C'est-à-dire dire que l'ouvrant 14 de la première porte 10 occulte l'extrémité extérieure 15 du dormant 13 de la première porte 10.

La face de verrouillage 19 est positionnée vers l'intérieure de l'enceinte contaminée 12. Les pênes de l'ouvrant 14 sont engagés chacun dans une fente de l'extrémité extérieure 15 de manière à verrouiller l'ouvrant 14 au dormant 13.

Dans cette configuration, la première porte 10 permet de garantir l'étanchéité de l'enceinte contaminée 12. De plus, le positionnement de l'ouvrant 14 à l'extérieure de l'enceinte contaminée 12 permet à la première porte 10 de résister à une forte dépression et ainsi de garantir l'étanchéité de l'enceinte contaminée 12 lorsque l'enceinte contaminée 12 est sous vide.

De plus, il est précisé que la description qui va suivre part d'une situation dans laquelle la deuxième porte 50 est fermée. C'est-à-dire, que l'ouvrant 51 de la deuxième porte 50 obstrue le dormant 52, et le pêne rotatif 63 est engagé dans la gâche 59 pour verrouiller l'ouvrant 51 au dormant 52 de la deuxième porte 50.

Pour extraire un élément de l'intérieur de l'enceinte contaminée 12, un utilisateur doit accoupler la première porte 10 à la deuxième porte 50 qui appartient à la boite de transfert 30.

Ainsi, l'utilisateur accoste l'anneau d'accouplement 54 autour du retour circulaire 16. Le retour circulaire 16 est engagé dans la rainure intérieure 56 de l'anneau d'accouplement 54. L'anneau d'accouplement 54 et le retour circulaire 16 coopèrent selon un mode de fixation de type assemblage à baïonnette. Les poignées 57 permettent à l'utilisateur de faire pivoter l'anneau d'accouplement 54, pour verrouiller la liaison entre la première porte 10 et la deuxième porte 50.

Lors de l'introduction du retour circulaire 16 dans la rainure intérieure 56, le macaron 65 pénètre dans l'empreinte 18. Les doigts radiaux du macaron 65 sont positionnés en position déployée. En position déployée, les doigts radiaux du macaron 65 exercent un effort dans l'empreinte 18. Ainsi, en position déployée les doigts radiaux permettent l'accouplement de l'ouvrant 14 de la première porte 10 à l'ouvrant 51 de la deuxième porte 50. De plus, les doigts radiaux du macaron 65 permettent d'actionner l'organe de commande positionné dans l'empreinte 18 et permettent ainsi le déverrouillage de l'ouvrant 14 de la première porte 10. L'utilisateur peut alors introduire ses mains dans des gants fixés aux ronds de gants 33, pour manoeuvrer la poignée pivotante 64.

L'utilisateur actionne la poignée pivotante 64 pour désengager le pêne 63 de la gâche 59 et pour placer les deux ouvrants 14 et 51 accouplés en position ouverte.

L'utilisateur peut récupérer un élément dans l'enceinte contaminée 12 et le placer dans la boite de transfert 30.

A l'issue du transfert, l'utilisateur place les deux ouvrants 14 et 51 accouplés en position fermée. Puis, l'utilisateur manoeuvre la poignée pivotante 64 pour engager le pêne 63 dans la gâche 59 et ainsi verrouiller la deuxième porte 50. De plus, le verrouillage de la deuxième porte 50 provoque le verrouillage de la première porte 10.

L'utilisateur peut ensuite séparer l'anneau d'accouplement 54 et le retour circulaire 16.

Ainsi l'invention propose un ensemble de transfert qui permet de garantir l'étanchéité d'une enceinte contaminée sous vide et qui garantit l'étanchéité du transfert d'un élément entre l'enceinte contaminée et la boite de transfert.

Bien entendu, l'invention ne se limite pas à la seule forme d'exécution de l'ensemble de transfert décrite ci-dessus, elle embrasse au contraire toutes les formes de réalisation couvertes par les revendications ci-jointes.

## Revendications

1. Ensemble de transfert (1) d'un élément depuis ou vers l'intérieur d'une enceinte contaminée (12) close présentant une ouverture (11), comprenant (i) une première porte (10) obturant de manière sensiblement étanche l'ouverture (11) de l'enceinte contaminée (12) et (ii) une boite de transfert (30) délimitant un espace clos et présentant une ouverture obturée par une deuxième porte (50) configurée pour pivoter vers l'intérieur de la boite de transfert (30), la première porte (10) et la deuxième porte (50) présentant chacune au moins un organe d'accouplement configuré pour permettre l'accouplement de la première porte (10) et de la deuxième porte (50) et configuré pour permettre à la première porte (10) et à la deuxième porte (50) accouplées l'une à l'autre de pivoter vers l'intérieur de la boite de transfert (30), la deuxième porte (50) présentant un organe de manoeuvre et un organe de déverrouillage configuré pour permettre le déverrouillage et le verrouillage de la deuxième porte (50), l'ensemble de transfert étant **caractérisé par** au moins une poignée pivotante (64), positionnée à l'interieur de la boite de transfert (30), comprenant l'organe de manoeuvre et l'organe de déverrouillage.

2. Ensemble de transfert (1) selon la revendication 1, **caractérisé en ce que** la première porte (10) comprend un dormant (13), un ouvrant (14), des organes de fixation de l'ouvrant (14) sur le dormant (13) et au moins une butée adaptée pour bloquer une translation de l'ouvrant (14) vers l'intérieur de l'enceinte contaminée (12).

3. Ensemble de transfert (1) selon l'une des revendications 1 à 2, **caractérisé en ce que** la boite de transfert (30) présente au moins un orifice (31) configuré pour permettre l'introduction d'une main d'un utilisateur dans la boite de transfert (30).

4. Ensemble de transfert (1) selon l'une des revendications 1 à 3, **caractérisé en ce que** ledit au moins un organe d'accouplement de la première porte comprend au moins une empreinte (20) configurée pour recevoir un macaron (65) de forme correspondante de la deuxième porte (50).

5. Ensemble de transfert (1) selon l'une des revendications 3, **caractérisé en ce qu'**au moins un gant est assemblé audit au moins un orifice (31), pour protéger une main d'un utilisateur lors de son introduction dans la boite de transfert (30).

6. Ensemble de transfert (1) selon l'une des revendications 1 à 5, **caractérisé en ce que** l'ensemble de transfert (1) comprend au moins un capteur configuré pour détecter l'ouverture et la fermeture de la seconde porte (50).

7. Ensemble de transfert (1) selon la revendication 6, **caractérisé en ce que** l'ensemble de transfert (1) comprend un dispositif de commande relié audit au moins un capteur.

## Patentansprüche

1. Baugruppe zum Umladen (1) eines Elements aus einem oder ins Innere eines geschlossenen kontaminierten Raumes (12), der eine Öffnung (11) aufweist, die (i) eine erste Tür (10) umfasst, die die Öffnung (11) des kontaminierten Raumes (12) im Wesentlichen dicht verschließt, und (ii) und ein Umladungsgehäuse (30), das einen abgeschlossenen Bereich eingrenzt, der eine durch eine zweite Tür (50) verschlossene Öffnung aufweist, die konfiguriert ist, um ins Innere des Umladungsgehäuses (30) zu schwenken, wobei die erste Tür (10) und die zweite Tür (50) jeweils mindestens ein Kupplungsorgan aufweist, das konfiguriert ist, um die Kupplung der ersten Tür (10) und der zweiten Tür (50) zu ermöglichen, und konfiguriert, um es der ersten Tür (10) und der zweiten Tür (50), die aneinander gekuppelt sind, zu ermöglichen, ins Innere des Umladungsgehäuses (30) zu schwenken, wobei die zweite Tür (50) ein Manövrierorgan und ein Entriegelungsorgan aufweist, das konfiguriert ist, um die Entriegelung und die Verriegelung der zweiten Tür (50) zu ermöglichen, wobei die Baugruppe zum Umladen durch mindestens einen Schwenkgriff (64) gekennzeichnet ist, der das Manövrierorgan und das Entriegelungsorgan umfassend im Inneren des Umladungsgehäuses (30) positioniert ist.

2. Baugruppe zum Umladen (1) nach Anspruch 1, **dadurch gekennzeichnet, dass** die erste Tür (10) eine Zarge (13), einen Flügel (14), Organe zur Befestigung des Flügels (14) an der Zarge (13) und mindestens einen Anschlag umfasst, der angepasst ist, um eine Verschiebung des Flügels (14) ins Innere des kontaminierten Raumes (12) zu blockieren.

3. Baugruppe zum Umladen (1) nach einem der Ansprüche 1 bis 2, **dadurch gekennzeichnet, dass** das Umladungsgehäuse (30) mindestens eine Öffnung (31) aufweist, die konfiguriert ist, um das Einführen einer Hand eines Nutzers in das Umladungsgehäuse (30) zu ermöglichen.

4. Baugruppe zum Umladen (1) nach einem der Ansprüche 1 bis 3, **dadurch gekennzeichnet, dass** das mindestens eine Kupplungsorgan der ersten Tür mindestens eine Vertiefung (20) umfasst, die konfiguriert ist, um eine Plakette (65) in einer der zweiten Tür (50) entsprechenden Form aufzunehmen.

5. Baugruppe zum Umladen (1) nach einem der Ansprüche 3, **dadurch gekennzeichnet, dass** mindestens ein Handschuh an der mindestens einen Öffnung (31) angebracht ist, um eine Hand eines Nutzers bei deren Einführung in das Umladungsgehäuse (30) zu schützen.

6. Baugruppe zum Umladen (1) nach einem der Ansprüche 1 bis 5, **dadurch gekennzeichnet, dass** die Baugruppe zum Umladen (1) mindestens einen Sensor umfasst, der konfiguriert ist, um die Öffnung und die Schließung der zweiten Tür (50) zu detektieren.

7. Baugruppe zum Umladen (1) nach Anspruch 6, **dadurch gekennzeichnet, dass** die Baugruppe zum Umladen (1) eine Steuerungsvorrichtung umfasst, die mit dem mindestens einen Sensor verbunden ist.

## Claims

1. A transfer assembly (1) for transferring an element from or towards the inside of a closed contaminated enclosure (12) having an opening (11), comprising (i) a first door (10) closing substantially in a sealed manner the opening (11) of the contaminated enclosure (12) and (ii) a transfer box (30) delimiting a closed space and having an opening closed by a second door (50) configured to pivot towards the inside of the transfer box (30), each of the first door (10) and the second door (50) having at least one coupling member configured to allow the coupling of the first door (10) and the second door (50) and configured to allow the first door (10) and the second door (50) coupled to each other to pivot towards the inside of the transfer box (30), the second door (50) having a maneuvering member and an unlocking member configured to allow the unlocking and the locking of the second door (50), the transfer assembly being **characterized by** at least one pivoting handle (64), positioned inside the transfer box (30), comprising the maneuvering member and the unlocking member.

2. The transfer assembly (1) according to claim 1, **characterized in that** the first door (10) comprises a frame (13), a door leaf (14), members for fastening the door leaf (14) on the frame (13) and at least one stop adapted to block a translation of the door leaf (14) towards the inside of the contaminated enclosure (12).

3. The transfer assembly (1) according to any of claims 1 to 2, **characterized in that** the transfer box (30) has at least one orifice (31) configured to allow the introduction of a hand of a user into the transfer box (30).

4. The transfer assembly (1) according to any of claims 1 to 3, **characterized in that** said at least one coupling member of the first door comprises at least one imprint (20) configured to receive a correspondingly shaped macaron (65) of the second door (50).

5. The transfer assembly (1) according to any of claims 1 to 3, **characterized in that** at least one glove is assembled to said at least one orifice (31), in order to protect a hand of a user during its insertion into the transfer box (30).

6. The transfer assembly (1) according to any of claims 1 to 5, **characterized in that** the transfer assembly (1) comprises at least one sensor configured to detect the opening and the closure of the second door (50).

7. The transfer assembly (1) according to claim 6, **characterized in that** the transfer assembly (1) comprises a control device connected to said at least one sensor.
